# EUROPÄISCHE PATENTSCHRIFT

(11) **EP 0 309 826 B1**
(45) Veröffentlichungstag und Bekanntmachung des Hinweises auf die Patenterteilung: **21.04.1993**
(21) Anmeldenummer: 88115177.3
(22) Anmeldetag: 16.09.1988
(51) Int. Cl.: H01S 3/038, H01S 3/08, H01S 3/097

(54) **Entladungskanal für Hochleistungslaser**
Discharge channel for a high-power laser
Canal de décharge pour laser à haute puissance

(30) Priorität: 24.09.1987 DE 3732135
(43) Veröffentlichungstag der Anmeldung: 05.04.1989
(60) Teilanmeldung: 92115015.7
(73) Patentinhaber: Deutsche Forschungsanstalt für Luft- und Raumfahrt e.V., 51126 Köln (DE)
(72) Erfinder: Giesen, Adolf, Dr. rer. nat., D-7253 Renningen 1 (DE); Schock, Wolfram, Dr.-Ing., D-7030 Böblingen (DE); Gehringer, Erwin, D-7030 Böblingen 4 (DE); Moritz, Peter C., D-7000 Stuttgart 80 (DE)
(74) Vertreter: Hoeger, Stellrecht & Partner

(56) Entgegenhaltungen:
- WO-A-87/03146
- DE-A- 3 240 836
- GB-A- 2 107 512
- US-A- 3 748 594
- US-A- 4 510 606

## Beschreibung

Die Erfindung betrifft einen Entladungskanal für Hochleistungslaser, insbesondere für hochfrequenzangeregte Hochleistungslaser, mit einer dielektrischen Kanalwand und mit mindestens zwei einander gegenüberliegenden Elektrodenanordnungen, zwischen denen ein von einem Lasergasstrom durchsetzter Entladungsraum liegt und von denen mindestens eine einen gegenüber dem Entladungsraum mittels eines Dielektrikums abgeschirmten und an der Kanalwand gehaltenen Metallkern aufweist, wobei der Metallkern an einer Innenseite der Kanalwand angeordnet ist, und das Dielektrikum einen den Metallkern übergreifenden Abdeckkörper umfasst.

Derartige Entladungskanäle sind aus dem Stand der Technik bekannt.

Die Anordnungen derartiger Entladungskanäle haben den Nachteil, daß das den Metallkern abschirmende und für eine gleichmäßige Verteilung des Entladungsstroms für die gesamte Elektrodenanordnung sorgende Dielektrikum nicht frei wählbar ist, sondern aufgrund der Stabilitätsanforderungen, die durch die Tatsache, daß der Entladungsraum mit dem Lasergasstrom unter Unterdruck steht, hinsichtlich des Materials und der Dicke vorgegeben ist. Zur Variation der Dicke des Dielektrikums besteht lediglich noch die Möglichkeit, in die Kanalwand Vertiefungen einzuarbeiten, in welchen die Elektrode liegt, was aber wiederum zu mechanischen Stabilitätsproblemen führt.

Derartige Elektrodenanordnungen sind jedoch für Hochleistungslaser mit ausgedehnten Elektrodenflächen und großvolumigen Entladungskanälen nur mit hohem technischem Aufwand realisierbar. Der Erfindung liegt daher die Aufgabe zugrunde, einen Entladungskanal der gattungsgemäßen Art derart zu verbessern, daß dieser auf möglichst einfache Weise herstellbar ist.

US-A-3 748 594, das die Merkmale gemäß dem Oberbegriff des Anspruchs 1 offenbart, beschreibt einen Hochfrequenzangeregten Gasdurchflußlaser, der zwei Metallplattenelektroden aufweist, die mit einer dünnen Schicht eines dielektrischen Materials überzogen sind, welche zwischen den Elektroden und dem Entladungskanal angeordnet ist.

Die Aufgabe der Erfindung wird bei einem Entladungskanal der eingangs beschriebenen Art erfindungsgemäß dadurch gelöst, daß Zwischenräume zwischen einander zugewandten Flächen des Metallkerns und des Abdeckkörpers mit einer Verbindungsmasse ausgefüllt sind. Der große Vorteil der erfindungsgemäßen Lösung ist darin zu sehen, daß durch die Anordnung des Metallkerns und des Abdeckkörpers als separate,nicht tragende Bauteile an der Innenseite der Kanalwand die aus dem Stand der Technik bekannten Einschränkungen nicht mehr vorliegen und daher der Metallkern sowie die Abdeckung hinsichtlich ihrer Materialien und ihrer Form ohne Rücksicht auf die Stabilitätsanforderungen für die Kanalwand frei wählbar sind. Ferner hat die erfindungsgemäße Lösung den großen Vorteil, daß durch das Ausfüllen der zwangsläufig zwischen dem Metallkörper und der Abdeckung entstehenden Zwischenräume mittels der Verbindungsmasse parasitäre Entladungen zwischen dem Metallkern und dem Abdeckkörper vermieden werden, die bei der erfindungsgemäßen Anordnung dann entstehen würden, wenn in diesen Zwischenräumen auch das unter Unterdruck stehende Lasergas vorhanden wäre.

Unter Hochfrequenz im Sinne der vorliegenden Erfindung sind dabei Frequenzen von 100 kHz bis 500 MHz zu verstehen und bei dem Lasergas handelt es sich insbesondere um die Lasergasgemische für CO₂ und CO-Laser.

Da der Abdeckkörper und der Metallkern nunmehr innerhalb des Entladungsraums liegen, sind diese auch in verstärktem Maße den in dem Entladungsraum herrschenden Temperaturen ausgesetzt, die in der Grenzschicht zwischen Plasma und Elektroden, in welcher ein Großteil der Verlustwärme entsteht, vorliegen. Um auch bei unterschiedlichen Temperaturausdehnungskoeffizienten ein Brechen der Verbindungsmasse und somit das Auftreten von kleinen Zwischenräumen zu unterbinden ist es vorteilhaft, wenn die Verbindungsmasse elastisch oder plastisch verformbar ist.

Die Verbindungsmasse zwischen dem Metallkern und dem Abdeckkörper wird bei Hochfrequenzanregung von hohen elektrischen Feldern durchsetzt, so daß es nützlich ist, wenn die Verbindungsmasse bei Hochfrequenz kleine dielektrische Verluste aufweist.

Der Abdeckkörper wird, da er unmittelbar an die eigentliche Gasentladung angrenzt, sehr stark erhitzt, so daß es erwünscht ist, wenn die Wärme über den Metallkörper abgeführt werden kann. Aus diesem Grund ist es vorteilhaft, wenn die Verbindungsmasse eine gute Wärmeleitfähigkeit aufweist.

Ein im Rahmen der erfindungsgemäßen Lösung besonders vorteilhaftes Ausführungsbeispiel sieht vor, daß die Verbindungsmasse metallgefüllt ist, wodurch sowohl kleine dielektrische Verluste als auch eine gute Wärmeleitfähigkeit problemlos erreichbar sind.

Bei den bisher beschriebenen Ausführungsbeispielen wurde nicht festgelegt, wie der Abdeckkörper an dem Metallkern gehalten ist. So wäre es z.B. denkbar, den Abdeckkörper durch Formschluß an dem Metallkern zu halten. Besonders einfach herzustellen ist jedoch eine Elektrodenanordnung, bei welcher der Abdeckkörper mittels der Verbindungsmasse an dem Metallkern gehalten ist, so daß die erfindungsgemäße Verbindungsmasse gleichzeitig als Klebemasse dient und das Herstellen einer formschlüssigen Verbindung unnötig ist.

Insbesondere dann, wenn die Verbindungsmasse als Klebemasse dient, ist es vorteilhaft, wenn diese einen Silikonkleber umfaßt. Alternativ dazu ist es ebenfalls vorteilhaft, wenn die Verbindungsmasse einen Epoxidharzkleber umfaßt. Beide Kleberarten sind ausreichend elastisch oder plastisch und erlauben die Herstellung einer dauerhaften und festen Verbindung zwischen dem Metallkern und dem Abdeckkörper.

Bei den vorstehend beschriebenen Ausführungsbeispielen besteht noch die Möglichkeit, daß der Metallkern nicht vollständig von dem Abdeckkörper umschlossen ist. Aus diesem Grund ist vorgesehen, daß der Metallkern auf seinen nicht von dem Metallkörper übergriffenen Oberflächen mit einer Vergußmasse ummantelt ist, um weitere parasitäre Entladungen zu verhindern.

Bei dieser Vergußmasse hat es sich als vorteilhaft erwiesen, wenn diese Silikon umfaßt.

Wie bereits angedeutet, wird der Abdeckkörper dadurch, daß er unmittelbar an die Gasentladung angrenzt, sehr stark erhitzt, so daß eine gute Wärmeleitung zum Metallkern erforderlich ist. Da dieser an der Innenseite der Kanalwand angeordnet ist, stellt sich auch hier das Problem der Wärmeabfuhr. Aus diesem Grund hat es sich als vorteilhaft erwiesen, wenn der Metallkern mit Kühlkanälen versehen ist.

Eine besonders effektive Kühlung ist dann möglich, wenn sich die Kühlkanäle in Längsrichtung des Metallkerns erstrecken. Zusätzlich kann die Kühlung noch weiter dadurch verbessert werden, daß die Kühlkanäle an Stirnseiten des Metallkerns durch Querkanäle zu Mäandern verbunden sind.

Zur Halterung des Metallkerns hat es sich als vorteilhaft erwiesen, wenn dieser mit die Kanalwand durchdringenden Stegen versehen ist, welche sich zweckmäßigerweise dann ihrerseits an der Kanalwand abstützen.

Sofern der Metallkern mit Kühlkanälen versehen ist, hat es sich als zweckmäßig erwiesen, diese Kühlkanäle durch Kühlmittelbohrungen in den Stegen mit Kühlmittel zu versorgen.

Ferner dienen die Stege dazu, eine elektrisch leitende Verbindung zwischen dem Metallkern und der Hochfrequenzzuführung herzustellen.

Insbesondere um eine symmetrische Hochfrequenzeinkopplung zu ermöglichen, ist es vorteilhaft, wenn die Stege ungefähr in der Längsmitte des Metallkerns angeordnet sind.

Da sich in dem Lasergasstrom aufgrund der durch die elektrische Entladung bedingten Erwärmung des Lasergases auch die Dichte desselben ändert, ist es insbesondere bei quergeströmten Lasern, d.h. quer zur Längsrichtung der Elektrodenanordnungen strömendem Lasergas vorgesehen, daß zwischen den Elektrodenanordnungen eine in stromabwärts des Lasergasstroms weisender Richtung abnehmende Feldstärke vorliegt. Durch die Verringerung der Feldstärke in stromabwärts weisender Richtung läßt sich verhindern, daß sich die Entladungsstromdichte im stromabwärts liegenden Bereich der Elektrodenanordnung konzentriert und damit eine ungleichmässige Entladung vorliegt. Zur Verringerung der Feldstärke sieht eine Möglichkeit vor, daß der Metallkern in seinem stromabwärts des Lasergasstroms liegenden Bereich einen abgerundeten Querschnitt aufweist.

Eine weitere Möglichkeit zur Verringerung der Feldstärke sieht vor, daß der Abdeckkörper in stromabwärts des Lasergasstroms weisender Richtung eine zunehmende Dicke aufweist, so daß die Feldstärke durch die zunehmende Dicke des Dielektrikums ebenfalls herabgesetzt wird.

Eine weitere Möglichkeit zur Verringerung der Feldstärke ist dann gegeben, wenn der Abdeckkörper stromabwärts liegende und im Entladungsraum zugewandte Oberflächen des Metallkerns vollständig umgreift.

Im letzteren Fall hat es sich als besonders vorteilhaft erwiesen, wenn der Abdeckkörper sich bis zur Kanalwand erstreckt.

Bei sämtlichen vorstehend beschriebenen Ausführungsbeispielen wurde im einzelnen nicht näher erläutert, aus welchem Material der Abdeckkörper vorzugsweise hergestellt ist. So hat es sich erfindungsgemäsß als zweckmäßig erwiesen, den Abdeckkörper aus Quarzglas, aus Teflon oder aus Keramik, insbesondere aus Al₂O₃ oder Silikatkeramik herzustellen.

Weitere Merkmale und Vorteile sind Gegenstand der nachfolgenden Beschreibung sowie der zeichnerischen Darstellung einiger Ausführungsbeispiele In der Zeichnung zeigen:
- Figur 1: eine geschnittene perspektivische Darstellung eines Entladungskanals eines erfindungsgemäßen Lasers;
- Figur 2: eine Draufsicht in Richtung des Pfeils A einer ersten Variante einer Elektrodenanordnung;
- Figur 3: ein teilweise aufgebrochenes Endstück eines Metallkerns in Figur 2;
- Figur 4: eine Draufsicht ähnlich der Figur 2 einer zweiten Variante;
- Figur 5: eine Draufsicht ähnlich der Figur 2 einer dritten Variante
- Figur 6: eine Draufsicht ähnlich der Figur 2 einer vierten Variante und
- Figur 7: eine teilweise aufgebrochene Draufsicht auf ein weiteres Ausführungsbeispiel eines Metallkerns.

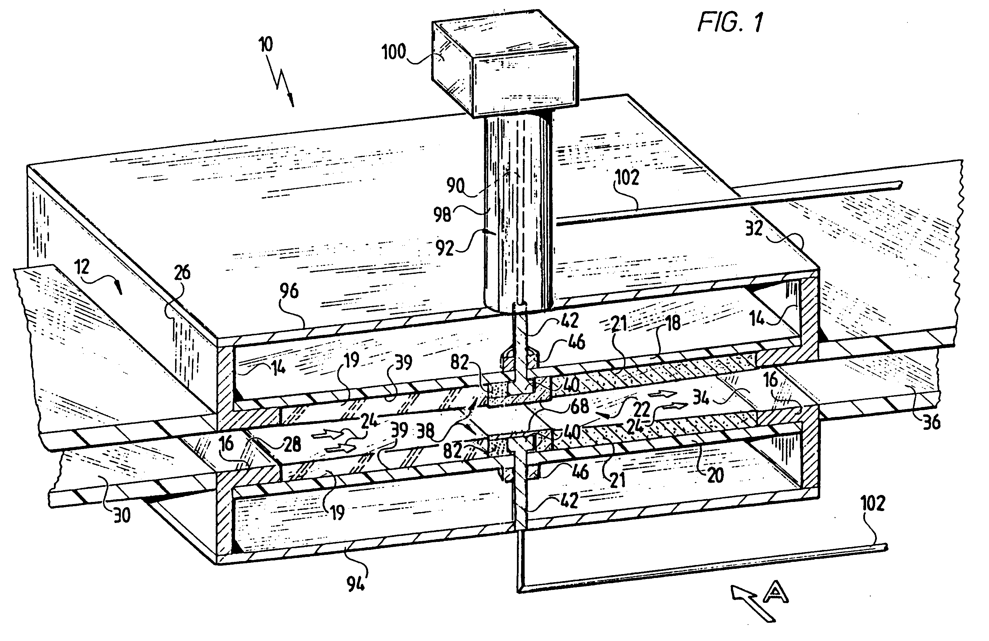

Ein in Figur 1 dargestelltes Ausführungsbeispiels des erfindungsgemäßen Lasers umfaßt ein als Ganzes mit 10 bezeichnetes Gehäuse, mit einem Tragrahmen 12, welcher auf einer Innenseite 14 mit einem Wulst 16 versehen ist, auf welchem eine von einer oberen offenen Seite des Tragrahmens 12 eingesetzte Kanalwand 18 und eine von einer unteren offenen Seite des Tragrahmens 12 eingesetzte Kanalwand 20 aufliegen, welche durch den Wulst 16 im wesentlichen parallel und im Abstand voneinander gehalten sind. Ein als Ganzes mit 22 bezeichneter Entladungsraum ist durch die Kanalwände 18 und 20 von oben und unten sowie seitlich durch den Wulst 16 begrenzt.

Der Entladungsraum 22 wird von einem durch die Pfeile 24 dargestellten Lasergasstrom durchsetzt, welcher durch einen ein Vorderteil 26 des Tragrahmens 10 ungefähr mittig des Wulsts 16 durchdringenden Einströmschlitz 28 in den Entladungsraum 22 eintritt und dem Einströmschlitz 28 über einen mit diesem verbundenen Einströmkanal 30 zugeführt wird. Den Entladungsraum 22 verläßt der Lasergasstrom 24 über ein ungefähr mittig des Wulsts 16 in einem Hinterteil 32 des Rahmens 12 angeordneten Ausströmschlitz 34, an welchem sich ein Ausströmkanal 36 anschließt. Der Einströmkanal 30 und Ausströmkanal 36 sind Teil eines geschlossenen Lasergasumwälzsystems zur Kühlung der Lasergases vor einer erneuten Zufuhr durch den Einströmschlitz 28.

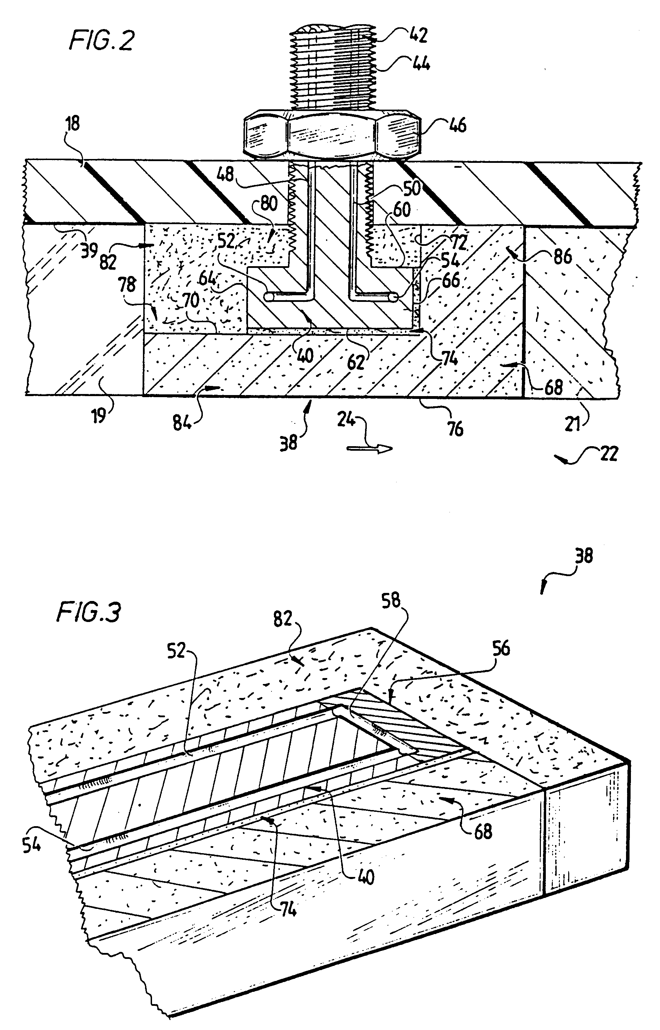

In dem Entladungsraum 22 sind ungefähr mittig der Kanalwände 18 und 20 und quer zum Lasergasstrom 24 sich im wesentlichen über eine gesamte Breite des Entladungsraums 22 quer zum Lasergasstrom 24 erstreckende Elektrodenanordnungen 38 jeweils an einer Innenseite 39 der Kanalwand 18 bzw. 20 gehalten, deren Aufbau in Form von verschiedenen Varianten in den Fig. 2 bis 6 dargestellt ist.

Diese Elektrodenanordnungen 38 sind zweckmäßigerweise in ihrer Längsrichtung in einzelne Segmente unterteilt. Zur Erreichung möglichst guter Strömungsverhältnisse im Entladungsraum 22 sind stromaufwärts der Elektrodenanordnungen Glasplatten 19 vorgesehen, welche vom Einströmschlitz 28 bis zur Elektrodenanordnung 38 reichen, sowie stromabwärts der Elektrodenanordnungen 38 von diesen bis zum Ausströmschlitz 34 reichende Keramikplatten 21. Die Glasplatten 19 und die Keramikplatten 21 sind dabei so angeordnet, daß sie vom Einströmschlitz 28 bis zum Ausströmschlitz 34 ein dem Lasergasstrom zu zugewandte, durchgehende und möglichst stufenfreie Fläche bilden, in welche die Elektrodenanordnung 38 integriert ist. Somit wird eine Wirbelbildung im Lasergasstrom 24 weitgehend vermieden.

Die in Figur 2 darstellte Elektrodenanordnung 38 umfaßt einen sich quer zum Lasergasstrom 24 und parallel zu der Innenseite 39 beispielsweise der Kanalwand 18 in Form einer rechteckförmigen Leiste erstreckenden Metallkern 40, welcher durch einen ungefähr senkrecht von diesem in Richtung der Kanalwand 18 abstehenden und diese durchdringenden Steg 42 an der Kanalwand 18 gehalten ist, wobei dieser Steg zum Beispiel kreiszylindrisch ausgebildet und mit einem Aussengewinde 44 versehen ist, auf welches eine Mutter 46 aufschraubbar ist, über welche sich der Steg 42 dann auf der Kanalwand 18 abstützt.

In Längsrichtung dieses Stegs 42 verlaufen parallel zueinander zwei Kühlmittelbohrungen 48 und 50, welche im Metallkern 40 in zwei parallel zueinander und in Längsrichtung der Metallkerns verlaufende Kühlkanäle 52 bzw. 54 einmünden. Diese Kühlkanäle 52 und 54 erstrecken sich längs des gesamten Metallkerns 40 und sind durch einen in einem den Metallkern 40 stirnseitig abschliessenden Endstück 56 angeordneten Querkanal 58 miteinander verbunden, so daß die Kühlkanäle 52 und 54 mit dem Querkanal 58 in dem Metallkern 40 eine Mäanderschleife bilden. Es ist ausserdem im Rahmen der erfindungsgemäßen Lösung möglich, daß mehrere ebenfalls durch entsprechende Querkanäle verbundene Mäanderschleifen vorgesehen sind.

Der einen rechteckigen Querschnitt aufweisende Metallkern 40 ist so ausgerichtet, daß er mit seinen Breitseiten 60 und 62 parallel zu der Innenseite 39 der Kanalwand 18 ausgerichtet ist, wobei zwischen der der Kanalwand 18 zugewandten Breitseite 60 und der Innenseite 39 derselben ein Abstand verbleibt.

Die sich zwischen diesen Breitseiten 60 und 62 erstreckenden Schmalseiten 64 und 66 verlaufen dabei im wesentlichen senkrecht zu den Breitseiten 62. Auf der der Kanalwand 18 abgewandten Breitseite 62 und auf der stromabwärts des Lasergasstroms 24 liegenden Schmalseite 66 liegt ein winkelartig ausgebildeter und sich beiderseits über die Breitseite 62 hinaus erstreckender Abdeckkörper 68 mit seinen senkrecht aufeinanderstehenden Auflageflächen 70 und 72 an, wobei zwischen der Breitseite 62 des Metallkerns 40 und der Auflagefläche 70 des Abdeckkörpers 68 sowie der Schmalseite 66 des Metallkerns 40 und der Auflagefläche 72 des Abdeckkörpers 68 eine metallgefüllte Verbindungsmasse 74 vorgesehen ist, welche den gesamten Abdeckkörper 68 an dem Metallkern 40 hält. Bei dieser metallgefüllten Verbindungsmasse 74 handelt es sich entweder um eine elastische Silikonklebemasse oder um eine elastische Epoxydharzklebemasse.

Der Abdeckkörper 68 ist aus einem dielektrischen Material hergestellt, wobei zu berücksichtigen ist, daß dieser mit seiner der Auflagefläche 70 gegenüberliegenden Oberfläche 76 an eine eigentliche Entladungszone im Entladungsraum 22 angrenzt und daher hohen Temperaturen ausgesetzt ist, so daß als Material für diesen Abdeckkörper lediglich hitzebeständige Materialien, wie z.B. Teflon, Quarzglas, oder noch zusätzlich gut wärmeleitende Materialien, wie z.B. Keramik, insbesondere Al₂O₃ oder Silikatkeramik, als im Rahmen der Erfindung bevorzugte Materialien in Frage kommen.

Da von dem Abdeckkörper 68 somit lediglich die Breitseite 62 und die Schmalseite 66 abgedeckt sind, ist es im Rahmen der erfindungsgemäßen Lösung, um parasitäre Entladungen zu vermeiden, erforderlich, auch zusätzlich noch die Breitseite 60 und die Schmalseite 64 des Metallkerns 40 sowie dessen Endstück 56 abzudecken. Aus diesem Grund sind der sich zwischen dem über den Metallkern 40 stromaufwärts überstehenden Abdeckkörper 68 und der Innenseite 39 der Kanalwand 18 bildende Zwischenraum 78 sowie der sich zwischen der Breitseite 60 des Metallkerns 40 und der Innenseite 39 der Kanalwand 18 bildende Zwischenraum 80 mit einer Vergußmasse 82 ausgefüllt, welche vorzugsweise eine Silikonmasse ist. Diese Lösung hat den zusätzlichen Vorteil, daß der Metallkern 40 nicht unmittelbar auf der Kanalwand 18 aufliegt.

Durch die Tatsache, daß der Abdeckkörper 68 winkelförmig ausgebildet ist und einen sich parallel zur Breitseite 62 erstreckenden Schenkel 84 sowie einen sich senkrecht vom Schenkel 84 bis zur Innenseite 39 der Kanalwand 18 parallel zur Schmalseite 66 erstreckenden Schenkel 86 umfaßt, wird erreicht, daß die Feldstärke eines sich ausgehend vom Metallkern 40 bildenden elektrischen Feldes zwischen der in Figur 2 dargestellten Elektrodenanordnung 38 und einer dieser gegenüberliegenden entsprechenden Elektrodenanordnung 38 stromabwärts des Lasergasstroms 24 hin abnimmt, so daß in einer stromabwärts des Lasergasstroms 24 weisenden Richtung die Entladungsstromdichte aufgrund einer Verringerung der Gasdichte nicht zunimmt, sondern längs des Lasergasstroms 24 konstant bleibt.

Somit ist bei der Elektrodenanordnung gemäß Figur 2 der über die Innenseite der Kanalwand 18 überstehende Metallkern 40 vollständig von dielektrischem Material umgeben,so daß keine parasitären Entladungen auftreten können, wobei allerdings die Vergußmasse 82 in der Regel einen hohen Verlustwinkel aufweist und daher kein gutes Dielektrikum darstellt, während der Abdeckkörper 68, der im wesentlichen von dem gesamten, von dem Metallkern 40 ausgehenden Feld durchsetzt ist, ein gutes Dielektrikum ist.

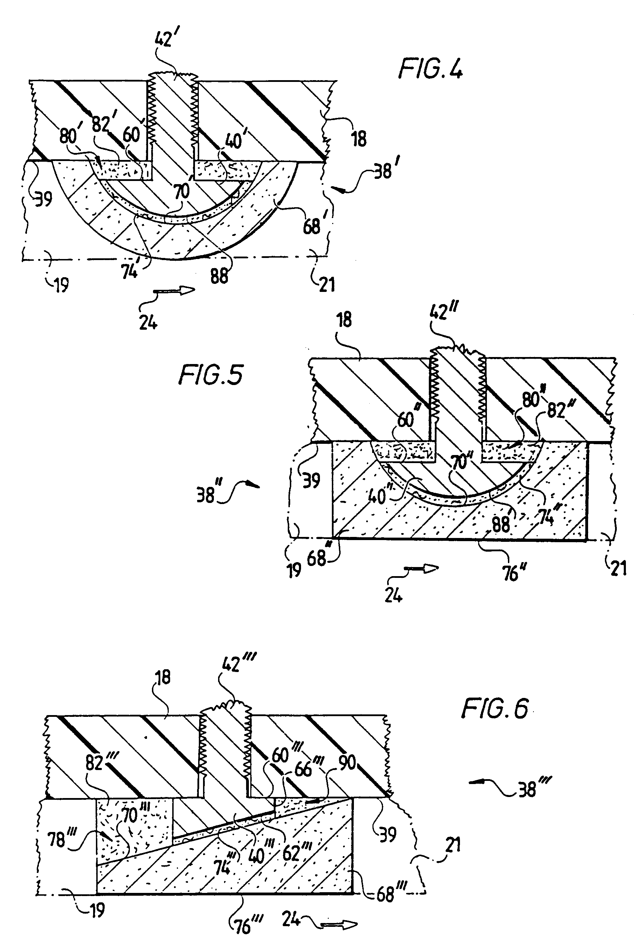

Eine zweite Variante einer erfindungsgemäßen Elektrodenanordnung 38′ ist in Figur 4 dargestellt, bei dieser ist der Metallkern 40′ nicht als Leiste mit einem rechteckigem Querschnitt ausgebildet, sondern ausgehend von der der Innenseite 39 der Kanalwand 18 zugewandten Breitseite 60′ zum Entladungsraum 22 hin mit einer gerundeten Vorderseite 88 versehen. Auf dieser gerundeten Vorderseite 88 liegt der Abdeckkörper 68′ mit seiner entsprechend der Vorderseite 88 gerundeten Auflagefläche 70′ an und ist zusätzlich über den Metallkern 40′ hinaus bis zur Innenseite 39 der Kanalwand 18 heruntergezogen, so daß er an dieser ebenfalls anliegt.

Der Zwischenraum zwischen dem Abdeckkörper 68′ und der Vorderseite 88 des Metallkerns 40 ist ebenfalls mit einer metallgefüllten Verbindungsmasse 74′ ausgefüllt, so daß der Abdeckkörper 68′ ebenfalls durch die Verbindungsmasse 74′ an dem Metallkern 40′ gehalten ist. Ferner ist der Zwischenraum 80′ zwischen der Breitseite 60′ und der Innenseite 39 der Kanalwand 18 mit der Vergußmasse 82′ ausgefüllt, um parasitäre Entladungen zu verhindern.

Aufgrund der abgerundeten Vorderseite 88 und des auf dieser aufliegenden Abdeckkörpers 68′ mit konstanter Dicke nimmt ausgehend von einem mittleren Bereich der Elektrodenanordnung 38′ die elektrische Feldstärke in stromabwärts weisender Richtung ab, so daß auch bei dieser Elektrodenanordnung 38′ durch die spezielle Krümmung der Vorderseite 88 eine konstante Entladungsstromdichte in stromabwärts weisender Richtung erreichbar ist.

Der Metallkern 40′ kann über den Steg 42′ in gleicher Weise wie bei der ersten in Figur 2 und 3 dargestellten Variante gekühlt werden, so daß auf eine gesonderte Beschreibung im Rahmen dieser Variante verzichtet wird.

Der Metallkern 40˝ einer dritten Variante, dargestellt in Figur 5, ist identisch ausgebildet, wie der Metallkern 40′ der zweiten Variante und ausserdem ist auch der Abdeckkörper 68˝ mit einer entsprechend der Vorderseite 88′ gekrümmten Auflagefläche 70˝ versehen, wobei zwischen der Auflagefläche 70˝ und der gekrümmten Vorderseite 88′ die metallgefüllte Verbindungsmasse 74˝ angeordnet ist, die den Abdeckkörper 68˝ an dem Metallkern 40˝ hält. Desgleichen ist auch der Zwischenraum 80˝ zwischen der Breitseite 60˝ und der Innenseite 39 mit Vergußmasse 82˝ gefüllt.

Der einzige Unterschied zur zweiten Variante zeigt sich in der Gestaltung der Oberfläche 76˝ des Abdeckkörpers 68˝. Bei der dritten Variante nimmt, ausgehend von einem mittleren Bereich der Elektrodenanordnung 38˝ in Richtung des Lasergasstroms 24,die Dicke des Abdeckkörpers 68˝ und somit auch die Dicke des Eielektrikums zu, was eine weitere Reduzierung der Feldstärke ausgehend von einem mittleren Bereich in stromabwärts weisender Richtung herbeiführt.

Die zweite und die dritte Variante, dargestellt in den Figuren 4 und 5 sind symmetrisch ausgebildet, so daß auch ausgehend von einem mittleren Bereich stromaufwärts eine Verringerung der elektrischen Feldstärke auftritt, die jedoch keinerlei Auswirkungen hat.

Bei der vierten Variante der erfindungsgemäßen Elektrodenanordnung 38‴ hat der Metallkern 40‴ zwar ebenfalls noch einen viereckigen Querschnitt ähnlich der ersten Variante, allerdings verläuft die Breitseite 62 ‴ nicht parallel zur Breitseite 60‴, sondern ist gegenüber der letzteren um einen spitzen Winkel geneigt, so daß sich ein Abstand zwischen den Breitseiten 60‴ und 66‴ in stromabwärts weisender Richtung verringert. Ausgehend von parallel zueinander verlaufenden Innenseiten 39 der Kanalwände 18 und 20 nimmt bei dieser Elektrodenanordnung der Abstand einander gegenüberliegender Breitseiten 62‴ stromabwärts zu, so daß die Feldstärke zwischen diesen abnimmt.

Der auf dem Metallkern 40‴ aufsitzende Abdeckkörper 68‴ weist seinerseits eine parallel zur Breitseite 60‴ verlaufende Auflagefläche 70‴ auf sowie eine dem Entladungsraum 22 zugewandte Oberfläche 76‴, welche parallel zur Breitseite 60‴ verläuft. Dadurch wird der Abstand zwischen der Auflagefläche 70‴ und der Oberfläche 76‴ des Abdeckkörpers 68‴ in stromabwärts weisender Richtung grösser, so daß auch die Dicke des Dielektrikums in dieser Richtung zunimmt und dafür sorgt, daß dadurch in stromabwärts weisender Richtung die elektrische Feldstärke abnimmt.

Der Abdeckkörper 68‴ ist ebenfalls mit einer metallgefülltem Verbindungsmasse 74‴ auf die Breitseite 62‴ des Metallkörpers 40‴ aufgeklebt und dadurch an diesem gehalten.

Ausserdem erstreckt sich der Abdeckkörper 68‴ sowohl stromaufwärts als auch stromabwärts über den Metallkern 40‴ hinaus,so daß der Zwischenraum 78‴ zwischen dem stromaufwärts über dem Metallkern 40‴ überstehenden Teil des Abdeckkörpers 68˝ und der Innenseite 39 der Kanalwand 18 sowie ein zwischen dem stromabwärts über den Metallkern 40‴ überstehenden Teil des Abdeckkörpers 68˝ und der Innenseite 39 der Kanalwand 18 entstehender Zwischenraum 90 jeweils mit der Vergußmasse 82 ‴ aufgefüllt sind.

Bei der vierten Variante liegt der Metallkern 40‴ mit seiner Breitseite 60‴ unmittelbar an der Innenseite 39 der Kanalwand 18 an, so daß zwischen diesen kein mit Vergußmasse aufzufüllender Zwischenraum besteht.

Zur Kühlung des Metallkerns 40‴ können ähnlich der ersten Variante in diesem Kühlkanäle vorgesehen sein, wobei hierzu auf die erste Variante verwiesen wird.

Bei sämtlichen Elektrodenanordnungen 38 bis 38‴ ist im Rahmen des beschriebenen Ausführungsbeispiels vorgesehen, daß zur symmetrischen Hochfrequenzeinkopplung der Steg 42, 42′, 42˝ und 42‴ jeweils mittig der Elektrodenanordnung 38, d.h. mittig des Metallkerns 40, 40′, 40˝, 40‴ angeordnet ist.

Der Steg 42 der in Figur 1 dargestellten oberen Elektrodenanordnung 38 ist dabei direkt mit einem Innenleiter 90 einer koaxialen Hochfrequenzstromzuleitung 92 verbunden, während der Steg 42 der unteren Elektrodenanordnung 38 über eine parallel zur Kanalwand 20 im Abstand von dieser angeordnete metallische Abschirmung 94, über den metallischen Tragrahmen 12 und dann wiederum über eine parallel zur Kanalwand 18 und im Abstand von dieser verlaufende metallische Abschirmung 96 mit einem Außenleiter 98 der koaxialen Stromzuleitung 92 verbunden ist. In diese koaxiale Stromzuleitung 92 wird mittels eines Hochfrequenzgenerators 100 die Hochfrequenz zur Hochfrequenzanregung eingespeist.

Zusätzlich sind aus den Stegen 42 Kühlleitungen 102 herausgeführt, welche einerseits mit einem zeichnerisch nicht dargestellten Kühlmitteleinspeisungssystem und andererseits mit der Kühlmittelbohrung 48 und 50 in den Stegen 42 in Verbindung stehen.

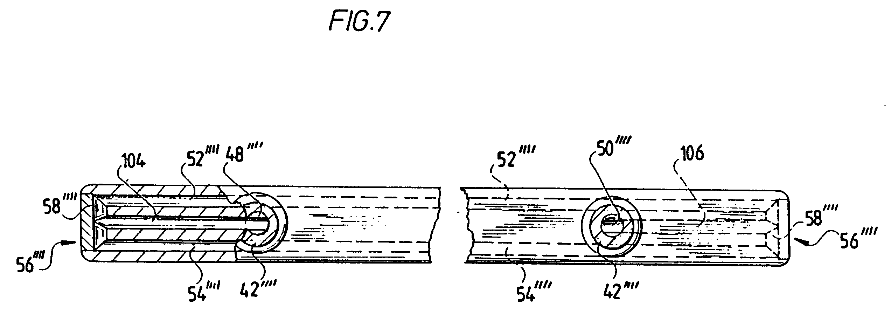

Bei einer weiteren Möglichkeit der Kühlung des Metallkerns 40‴, dargestellt in Fig. 7, ist der Metallkern 40‴ mit zwei im Abstand voneinander angeordneten Stegen 42‴ versehen. Durch diese Stege 42‴ ist jeweils eine Kühlmittelbohrung 48˝˝, 50˝˝ zum Metallkern 40˝˝ geführt, die in diesem jeweils einen zu einem Endstück 56˝˝ führenden Stichkanal 104 bzw. 106 münden. Diese Stichkanäle 104, 106 sind im Bereich der Endstücke 56˝˝ durch die Querkanäle 56˝˝ mit den sich längs des Metallkerns 40˝˝ erstreckenden Kühlkanälen 52˝˝ und 54˝˝ zu Mäandern verbunden.

## Patentansprüche

1. Entladungskanal für Hochleistungslaser, insbesondere für hochfrequenzangeregte Hochleistungslaser, mit einer dielektrischen Kanalwand (18, 20) und mit mindestens zwei einander gegenüberliegenden Elektrodenanordnungen (38), zwischen denen ein von einem Lasergasstrom (24) durchsetzter Entladungsraum (22) liegt und von denen mindestens eine einen gegenüber dem Entladungsraum (22) mittels eines Dielektrikums abgeschirmten und an der Kanalwand (18, 20) gehaltenen Metallkern (40) aufweist, wobei der Metallkern (40) an einer Innenseite (39) der Kanalwand (18, 20) angeordnet ist, und das Dielektrikum einen den Metallkern (40) übergreifenden Abdeckkörper (68) umfasst, dadurch gekennzeichnet, daß Zwischenräume zwischen einander zugewandten Flächen (62, 66, 88; 70, 72) des Metallkerns (40) und des Abdeckkörpers (68) mit einer Verbindungsmasse (74) ausgefüllt sind.

2. Entladungskanal nach Anspruch 1, dadurch gekennzeichnet, daß die Verbindungsmasse (74) elastisch oder plastisch verformbar ist.

3. Entladungskanal nach Anspruch 1 oder 2, dadurch gekennzeichnet, daß die Verbindungsmasse (74) bei Hochfrequenz kleine dielektrische Verluste aufweist.

4. Entladungskanal nach einem der voranstehenden Ansprüche, dadurch gekennzeichnet, daß die Verbindungsmasse (74) eine gute Wärmeleitfähigkeit aufweist.

5. Entladungskanal nach Anspruch 3 oder 4, dadurch gekennzeichnet, daß die Verbindungsmasse (74) metallgefüllt ist.

6. Entladungskanal nach einem der voranstehenden Ansprüche, dadurch gekennzeichnet, daß der Abdeckkörper (68) mittels der Verbindungsmasse (74) an dem Metallkern (40) gehalten ist.

7. Entladungskanal nach Anspruch 6, dadurch gekennzeichnet, daß die Verbindungsmasse (74) Silikonkleber umfaßt.

8. Entladungskanal nach Anspruch 6, dadurch gekennzeichnet, daß die Verbindungsmasse (74) einen Epoxydharzkleber umfaßt.

9. Entladungskanal nach einem der voranstehenden Ansprüche, dadurch gekennzeichnet, daß der Metallkern (40) auf seinen nicht von dem Abdeckkörper (68) übergriffenen Oberflächen (60, 64) mit einer Vergußmasse (82) ummantelt ist.

10. Entladungskanal nach Anspruch 9, dadurch gekennzeichnet, daß die Vergußmasse (82) Silikon umfaßt.

11. Entladungskanal nach einem der voranstehenden Ansprüche, dadurch gekennzeichnet, daß der Metallkern (40) mit Kühlkanälen (50, 52) versehen ist.

12. Entladungskanal nach Anspruch 11, dadurch gekennzeichnet, daß sich die Kühlkanäle (50, 52) in Längsrichtung des Metallkerns (40) erstrecken.

13. Entladungskanal nach Anspruch 12, dadurch gekennzeichnet, daß die Kühlkanäle (50, 52) an Stirnseiten des Metallkerns (40) durch Querkanäle (58) zu Mäandern verbunden sind.

14. Entladungskanal nach einem der voranstehenden Ansprüche, dadurch gekennzeichnet, daß der Metallkern mit einem die Kanalwand durchdringenden Steg versehen ist.

15. Entladungskanal nach Anspruch 14, dadurch gekennzeichnet, daß der Steg (42) ungefähr in der Längsmitte des Metallkerns (40) angeordnet ist.

16. Entladungskanal nach einem der voranstehenden Ansprüche, dadurch gekennzeichnet, daß zwischen den Elektrodenanordnungen (38) eine in stromabwärts des Lasergasstroms (24) weisender Richtung abnehmende Feldstärke vorliegt.

17. Entladungskanal nach Anspruch 16, dadurch gekennzeichnet, daß der Metallkern (40) in seinem stromabwärts des Lasergasstroms (24) liegenden Bereich einen abgerundeten Querschnitt aufweist.

18. Entladungskanal nach Anspruch 16 oder 17, dadurch gekennzeichnet, daß der Abdeckkörper (68) in stromabwärts des Lasergasstroms (24) weisender Richtung eine zunehmende Dicke aufweist.

19. Entladungskanal nach einem der Ansprüche 16 bis 18, dadurch gekennzeichnet, daß der Abdeckkörper (68) stromabwärts liegende und dem Entladungsraum (22) zugewandte Oberflächen (62, 66, 88) des Metallkerns (40) vollständig umgreift.

20. Entladungskanal nach einem der Ansprüche 17 bis 19, dadurch gekennzeichnet, daß der Abdeckkörper (68) sich bis zur Kanalwand (18, 20) erstreckt.

## Claims

1. Discharge channel for high-power lasers, in particular for high-frequency excited high-power lasers, comprising a dielectric channel wall (18, 20) and at least two electrode arrangements (38) arranged opposite one another, a discharge chamber (22) penetrated by a flow (24) of laser gas being located between said arrangements and at least one of said arrangements having a metal core (40) held on the channel wall (18, 20) and screened from the discharge chamber (22) by a dielectric, wherein the metal core (40) is arranged on an inner side (39) of the channel wall (18, 20) and the dielectric comprises a cover member (68) engaging over the metal core (40), characterized in that spaces between facing surfaces (62, 66, 88; 70, 72) of the metal core (40) and the cover member (68) are filled with a connecting mass (74).

2. Discharge channel as defined in claim 1, characterized in that the connecting mass (74) is elastically or plastically deformable.

3. Discharge channel as defined in claim 1 or 2, characterized in that the connecting mass (74) exhibits no dielectric losses at high frequency.

4. Discharge channel as defined in any of the preceding claims, characterized in that the connecting mass (74) has a good thermal conductivity.

5. Discharge channel as defined in claim 3 or 4, characterized in that the connecting mass (74) is filled with metal.

6. Discharge channel as defined in any of the preceding claims, characterized in that the cover member (68) is held on the metal core (40) by means of the connecting mass (74).

7. Discharge channel as defined in claim 6, characterized in that the connecting mass (74) comprises silicone adhesive.

8. Discharge channel as defined in claim 6, characterized in that the connecting mass (74) comprises an epoxy resin adhesive.

9. Discharge channel as defined in any of the preceding claims, characterized in that the metal core (40) is covered on its surfaces (60, 64) not overlapped by the cover member (68) with a sealing compound (82).

10. Discharge channel as defined in claim 9, characterized in that the sealing compound (82) comprises silicone.

11. Discharge channel as defined in any of the preceding claims, characterized in that the metal core (40) is provided with cooling channels (50, 52).

12. Discharge channel as defined in claim 11, characterized in that the cooling channels (50, 52) extend in the longitudinal direction of the metal core (40).

13. Discharge channel as defined in claim 12, characterized in that the cooling channels (50, 52) are connected at end faces of the metal core (40) by cross channels (58) to form meanders.

14. Discharge channel as defined in any of the preceding claims, characterized in that the metal core is provided with a web penetrating the channel wall.

15. Discharge channel as defined in claim 14, characterized in that the web (42) is arranged approximately in the longitudinal center of the metal core (40).

16. Discharge channel as defined in any of the preceding claims, characterized in that a field strength decreasing in a direction pointing downstream of the laser gas flow (24) is present between the electrode arrangements (38).

17. Discharge channel as defined in claim 16, characterized in that the metal core (40) has a rounded cross section in its region lying downstream of the laser gas flow (24).

18. Discharge channel as defined in claim 16 or 17, characterized in that the thickness of the cover member (68) increases in the direction pointing downstream of the laser gas flow (24).

19. Discharge channel as defined in any of claims 16 to 18, characterized in that the cover member (68) engages completely around surfaces (62, 66, 88) of the metal core (40) located downstream and facing the discharge chamber (22).

20. Discharge chamber as defined in any of claims 17 to 19, characterized in that the cover member (68) extends as far as the channel wall (18, 20).

## Revendications

1. Canal de décharge pour lasers à haute puissance, en particulier pour lasers à haute puissance excités par haute fréquence, comprenant une paroi diélectrique (18, 20) et au moins deux groupes d'électrodes (38) mutuellement opposés, entre lesquels se trouve une chambre de décharge (22) parcourue par un flux laser gazeux (24), et dont au moins l'un présente un noyau métallique (40) retenu sur la paroi (18, 20) du canal et protégé, par rapport à la chambre de décharge (22), au moyen d'un diélectrique, le noyau métallique (40) étant disposé à une face interne (39) de la paroi (18, 20) du canal, et le diélectrique englobant un corps de recouvrement (68) qui coiffe le noyau métallique (40), caractérisé par le fait que des espaces intercalaires, entre des surfaces mutuellement opposées (62, 66, 88 ; 70, 72) du noyau métallique (40) et du corps de recouvrement (68), sont comblés par une masse de liaison (74).

2. Canal de décharge selon la revendication 1, caractérisé par le fait que la masse de liaison (74) est déformable élastiquement ou plastiquement.

3. Canal de décharge selon la revendication 1 ou 2, caractérisé par le fait que la masse de liaison (74) présente de petites pertes diélectriques à haute fréquence.

4. Canal de décharge selon l'une des revendications précédentes, caractérisé par le fait que la masse de liaison (74) possède une bonne conductivité thermique.

5. Canal de décharge selon la revendication 3 ou 4, caractérisé par le fait que la masse de liaison (74) est emplie d'un métal.

6. Canal de décharge selon l'une des revendications précédentes, caractérisé par le fait que le corps de recouvrement (68) est retenu sur le noyau métallique (40) au moyen de la masse de liaison (74).

7. Canal de décharge selon la revendication 6, caractérisé par le fait que la masse de liaison (74) renferme un adhésif à base de silicone.

8. Canal de décharge selon la revendication 6, caractérisé par le fait que la masse de liaison (74) renferme un adhésif à base de résine époxyde.

9. Canal de décharge selon l'une des revendications précédentes, caractérisé par le fait que le noyau métallique (40) est enrobé par une masse de scellement (82) sur ses surfaces (60, 64) non coiffées par le corps de recouvrement (68).

10. Canal de décharge selon la revendication 9, caractérisé par le fait que la masse de scellement (82) renferme du silicone.

11. Canal de décharge selon l'une des revendications précédentes, caractérisé par le fait que le noyau métallique (40) est pourvu de canaux de refroidissement (50, 52).

12. Canal de décharge selon la revendication 11, caractérisé par le fait que les canaux de refroidissement (50, 52) s'étendent dans le sens longitudinal du noyau métallique (40).

13. Canal de décharge selon la revendication 12, caractérisé par le fait que les canaux de refroidissement (50, 52) sont reliés par l'intermédiaire de canaux transversaux (58), à des faces extrêmes du noyau métallique (40), pour former des méandres.

14. Canal de décharge selon l'une des revendications précédentes, caractérisé par le fait que le noyau métallique est muni d'une membrure traversant la paroi du canal.

15. Canal de décharge selon la revendication 14, caractérisé par le fait que la membrure (42) est disposée approximativement au centre longitudinal du noyau métallique (40).

16. Canal de décharge selon l'une des revendications précédentes, caractérisé par la présence, entre les groupes d'électrodes (38), d'une intensité de champ décroissant dans la direction orientée en aval du flux laser gazeux (24).

17. Canal de décharge selon la revendication 16, caractérisé par le fait que le noyau métallique (40) présente une section transversale arrondie dans sa région située en aval du flux laser gazeux (24).

18. Canal de décharge selon la revendication 16 ou 17, caractérisé par le fait que le corps de recouvrement (68) présente une épaisseur croissant dans la direction orientée en aval du flux laser gazeux (24).

19. Canal de décharge selon l'une des revendications 16 à 18, caractérisé par le fait que le corps de recouvrement (68) ceinture intégralement des surfaces (62, 66, 88) du noyau métallique (40) qui sont situées en aval et sont tournées vers la chambre de décharge (22).

20. Canal de décharge selon l'une des revendications 17 à 19, caractérisé par le fait que le corps de recouvrement (68) s'étend jusqu'à la paroi (18, 20) du canal.
